# EUROPEAN PATENT APPLICATION

(11) **EP 4 734 268 A1**
(43) Date of publication of application: **29.04.2026**
(21) Application number: 23941890.8
(22) Date of filing: 20.06.2023
(51) Int. Cl.: H01M 50/531, H01M 50/572, H01M 10/04

(54) **ELECTROCHEMICAL DEVICE AND ELECTRONIC DEVICE**

(71) Applicant: Ningde Amperex Technology Limited, Ningde, Fujian 352100 (CN)
(72) Inventor: JIANG, Nan, Ningde, Fujian 352100 (CN)
(74) Representative: Kraus & Lederer PartGmbB
(86) International application number: PCT/CN2023/101367
(87) International publication number: WO 2024/259583

(57) **Abstract**

An electrochemical device and an electronic device are disclosed. The electrochemical device includes a housing, an electrode assembly, a first conductive plate, a first layer, and a second layer. The housing includes a first wall and a side wall. The electrode assembly is a wound structure and includes a first electrode sheet. The first conductive plate includes a first conductive area and a second conductive area, connected to the first electrode sheet and the first wall, respectively. The second conductive area extends in a second direction and includes a first end portion connected to the first conductive area and a second end portion opposite the first end portion. In a first direction, the first layer is disposed between the electrode assembly and the second conductive area. When viewed from the first direction, the first layer includes a first side extending in a curved manner along an edge of the electrode assembly and a second side connected to the first side, where the second side overlaps with the electrode assembly, and the second side is farther from the edge of the electrode assembly than the first side to form a notch. When viewed from the first direction, the second end portion overlaps with the first layer, and a first area of the second layer overlaps with the first layer. This application can improve reliability and service life.

## Description

### TECHNICAL FIELD

This application relates to the field of energy storage technology, and in particular, to an electrochemical device and an electronic device having the electrochemical device.

### BACKGROUND

Electrochemical devices (such as secondary batteries) are widely used in electronic products such as mobile electronic devices, electric tools, and electric vehicles, and requirements for reliability and safety of electrochemical devices are increasingly high.

An electrochemical device typically includes a conductive plate. The conductive plate connects an electrode sheet and a housing, thereby leading out polarity of the electrode sheet through the housing. However, under some extreme conditions caused by improper use, burrs on the conductive plate may pierce the separator, causing a short circuit. When the electrochemical device is subjected to mechanical abuse, the conductive plate may also undergo fatigue fracture, leading to failure of the electrochemical device. This affects the safety, reliability, and service life of the electrochemical device.

### SUMMARY

In view of this, it is necessary to provide an electrochemical device with high reliability and safety.

Additionally, it is necessary to provide an electronic device having the foregoing electrochemical device.

A first aspect of this application provides an electrochemical device including a housing and an electrode assembly. The housing includes a first wall and a side wall connected to the first wall. The first wall and the side wall enclose a accommodating cavity, and the electrode assembly is accommodated in the accommodating cavity. A direction from the first wall to the electrode assembly is a first direction. The electrode assembly is a wound structure and includes a first electrode sheet, a second electrode sheet, and a separator disposed between the first electrode sheet and the second electrode sheet. The electrochemical device further includes a first conductive plate and a first layer. The first conductive plate includes a first conductive area and a second conductive area connected to each other, the second conductive area being bent with respect to the first conductive area. The first conductive area is connected to the first electrode sheet, and the second conductive area is connected to the first wall. The second conductive area includes a first end portion connected to the first conductive area and a second end portion disposed opposite the first end portion. The second conductive area extends from the first end portion in a second direction perpendicular to the first direction. The first layer includes an insulating material. In the first direction, the first layer is disposed between the electrode assembly and the second conductive area. When viewed from the first direction, the first layer includes a first side extending in a curved manner along an edge of the electrode assembly and a second side connected to the first side. The second side overlaps with the electrode assembly, and the second side is farther from the edge of the electrode assembly than the first side, forming a notch in the first layer. When viewed from the first direction, the second end portion overlaps with the first layer. The second layer includes an insulating material. The second layer includes a first area covering the second conductive area. The first area includes a first sub-area and a second sub-area connected to each other. When viewed from the first direction, the first sub-area covers the notch, and the second sub-area overlaps with the first layer.

In this application, the first layer is used to insulate the electrode assembly from the first wall, reducing the possibility of a short circuit caused by direct contact between the electrode assembly and the first wall. The first layer can also cover burrs on the second conductive area, reducing the possibility of the burrs piercing the separator and causing a short circuit. Moreover, the second side is disposed farther from the edge of the electrode assembly than the first side, so that when the electrochemical device is subjected to mechanical abuse, the compression exerted by the first layer on the bent portion between the first conductive area and the second conductive area can be reduced. This reduces the possibility of stress-induced fracture of the first conductive plate at the bent portion and the possibility of failure of the electrochemical device, as well as reducing the possibility of a short circuit caused by a sharp end formed after fracture of the first conductive plate piercing the separator. Therefore, the reliability and service life of the electrochemical device are improved. Furthermore, in this application, the first area of the second layer covers the notch, so that the first area can cooperate with the first layer to insulate the electrode assembly from the first wall, reducing the possibility of a short circuit caused by arrangement of the notch in the first layer. Additionally, the second layer can reduce the possibility of curling at the second side and prevent the first layer from moving within the housing.

In some possible implementations, when viewed from the first direction, the first end portion is located within the notch. This can reduce the friction between the first end portion and the side wall.

In some possible implementations, a surface of the first layer facing the first wall includes a first recess, and the first layer is connected to the second conductive area at the first recess. In this way, on the premise of ensuring the thickness of the first layer, the total thickness of the second conductive area and the first layer in the first direction can be reduced, thereby facilitating an increase in energy density.

In some possible implementations, the second side includes a curved portion. Considering that a cutout may be formed on the second side during cutting of the first layer, the second side is designed to include a curved portion, reducing the possibility of the cutout expanding further to form cracks during installation of the first layer.

In some possible implementations, a third direction is defined as perpendicular to the first direction and the second direction, a dimension of the second side in the third direction is d₂, a dimension of the second conductive area in the third direction is d, and d₂ > d. This allows the first layer to sufficiently cover the second conductive area, reducing the possibility of burrs on the second conductive area piercing the separator and causing a short circuit. Moreover, the first layer can sufficiently insulate the electrode assembly from the first wall, reducing the possibility of a short circuit caused by direct contact between the electrode assembly and the first wall.

In some possible implementations, the first electrode sheet includes a first current collector and a first active substance layer disposed on a surface of the first current collector. The first current collector includes a first portion separated from the first active substance layer, and the first conductive area is connected to the first portion. This can reduce the impact of the first conductive area on the energy density of the electrochemical device in the second direction and reduce the impact of the first conductive area on the overall flatness of the electrode assembly.

In some possible implementations, in the second direction, the first conductive area is disposed on a surface of the first portion facing the side wall. Due to the blocking effect of the first portion, the possibility of burrs on the first conductive area piercing the separator and causing a short circuit can be reduced.

In some possible implementations, the first area is disposed between the second conductive area and the electrode assembly in the first direction. The first area is used to cooperate with the first layer to insulate the electrode assembly from the first wall and to cover burrs on the second conductive area, reducing the possibility of a short circuit.

In some possible implementations, the second layer further includes a second area connected to the first area. The second area covers the first conductive area. The second area is used to cover burrs on the first conductive area, further reducing the possibility of the burrs piercing the separator and causing a short circuit.

In some possible implementations, the electrochemical device further includes a third layer containing an insulating material. The third layer includes a third area disposed between the second conductive area and the first wall in the first direction. The third area includes a third sub-area and a fourth sub-area connected to each other. When viewed from the first direction, the third sub-area covers the notch, and the fourth sub-area overlaps with the first layer. The third area is used to cooperate with the first layer to insulate the electrode assembly from the first wall, reducing the possibility of a short circuit.

In some possible implementations, the third layer further includes a fourth area connected to the third area. In the second direction, the first conductive area is disposed between the second area and the fourth area. The fourth area is used to cover burrs or weld marks on the first conductive area.

In some possible implementations, the second layer includes an adhesive layer and a substrate stacked. The adhesive layer includes the insulating material. The substrate is adhered to the first conductive plate via the adhesive layer. Since the third layer is not adhered to the electrode assembly, the injected electrolyte between the first layer and the first wall can sufficiently wet the electrode assembly, improving the interface during cycling, reducing capacity decay caused by lithium precipitation, black spots, purple spots, and the like, and enhancing the cycling performance of the electrochemical device.

In some possible implementations, a material of the substrate is selected from at least one of polyimide or polyethylene terephthalate. In some possible implementations, the insulating material of the adhesive layer is selected from at least one of butadiene, isoprene, styrene, methyl methacrylate, butyl methacrylate, isooctyl acrylate, or butyl acrylate, enabling the adhesive layer to have relatively good adhesion.

In some possible implementations, the fourth sub-area includes a second end facing away from the third sub-area in the second direction, a dimension between the second end and the side wall in the second direction is ds, a radius of the first wall is R, and d₅ < 0.4R. This can reduce the impact of the third area on the connection (welding) area between the second conductive plate and the first wall, reducing the possibility of the third area interfering with the connection area and causing failure of the connection area.

In some possible implementations, a third direction is defined as perpendicular to the first direction and the second direction, a dimension of the second side in the third direction is d₂, a dimension of the first area in the third direction is d₃, and d₂ < d₃. This enables the first area to cooperate with the first layer to insulate the electrode assembly from the first wall, reducing the possibility of a short circuit.

In some possible implementations, a distance between the second side and the side wall in the second direction is a first distance L, the second sub-area includes a first end facing away from the first sub-area in the second direction, a dimension between the first end and the side wall in the second direction is d₁, and 0.4 d₁ < L < d₁, thereby reducing the possibility that when the L value is too small, the injected electrolyte between the first layer and the first wall cannot sufficiently wet the electrode assembly. This improves the wetting effect of the electrode assembly, thereby improving the interface during cycling, reducing capacity decay caused by lithium precipitation, black spots, purple spots, and the like, and enhancing the cycling performance of the electrochemical device.

In some possible implementations, when viewed from the first direction, the second conductive area overlaps with a winding center axis of the electrode assembly. In this way, the second conductive area has a relatively large dimension in the second direction, helping improve the connection strength between the second conductive area and the first wall.

In some possible implementations, a winding starting end of the electrode assembly is provided with a cavity. When viewed from the first direction, the first layer covers the cavity. This application does not require an opening to be provided in the first layer at a position corresponding to the cavity to allow the electrolyte to sufficiently wet the electrode assembly, thereby reducing the possibility that weld marks of the first conductive area come into contact with the second electrode sheet through the opening to affect the service life of the electrochemical device.

In some possible implementations, the housing further includes a second wall connected to the side wall and disposed opposite the first wall. The second wall is provided with a conductive member electrically insulated from the second wall. The electrode assembly further includes a second conductive plate electrically connected to the second electrode sheet, the second conductive plate being connected to the conductive member. In this way, the first wall and the conductive member exhibit opposite electrode polarities, enabling the electrochemical device to supply power to external components.

In some possible implementations, the electrochemical device is a button cell, and when viewed from the first direction, an edge of the electrode assembly is substantially circular. Since the button cell typically has a small volume, in this implementation, it is unnecessary to reduce the size of the electrode assembly to reduce the compression exerted by the first layer on the bent portion of the first conductive plate, facilitating an increase in energy density.

A second aspect of this application further provides an electronic device including the foregoing electrochemical device. The electronic device is powered by the electrochemical device, and the electrochemical device has the second side disposed farther from the edge of the electrode assembly than the first side, reducing the possibility of fracture of the first conductive plate, thereby maintaining high reliability and service life.

### BRIEF DESCRIPTION OF DRAWINGS

The above and/or additional aspects and advantages of this application become apparent and readily understood from the description of embodiments in conjunction with the following drawings.
FIG. 1A is a perspective structural view of an electrochemical device according to an embodiment of this application.
FIG. 1B is a top view of the electrochemical device shown in FIG. 1A when viewed from the first direction.
FIG. 2A is a cross-sectional view of the electrochemical device shown in FIG. 1A along II-II.
FIG. 2B is a schematic structural diagram of a first electrode sheet when viewed from a fifth direction before an electrode assembly of the electrochemical device shown in FIG. 2A is wound.
FIG. 2C is a schematic structural diagram of the first electrode sheet shown in FIG. 2B when viewed from a first direction.
FIG. 3 is a cross-sectional view of the electrochemical device shown in FIG. 1B along III-III.
FIG. 4 is an enlarged view of the electrochemical device shown in FIG. 3 at position A.
FIG. 5 is a cross-sectional view of the electrochemical device shown in FIG. 1B along V-V.
FIG. 6 is a bottom view of the electrochemical device shown in FIG. 1A with a first wall of a housing removed, when viewed from a first direction.
FIG. 7 is a bottom view of the electrochemical device shown in FIG. 6 with a third layer removed, when viewed from a first direction.
FIG. 8 is a cross-sectional view of a second layer of the electrochemical device shown in FIG. 7.
FIG. 9 is a schematic structural diagram of an electrochemical device according to another embodiment of this application.
FIG. 10 is a cross-sectional view of an electrochemical device according to still another embodiment of this application.
FIG. 11 is a schematic structural diagram of an electronic device according to an embodiment of this application.

Description of main component signs:

| | |
|---|---|
| Electronic device | 1 |
| Housing | 10 |
| First wall | 11 |
| Second wall | 12 |
| Side wall | 13 |
| Conductive member | 14 |
| First insulating layer | 15 |
| Second insulating layer | 16 |
| Electrode assembly | 20 |
| First segment | 20a |
| Second segment | 20b |
| First electrode sheet | 21 |
| Second electrode sheet | 22 |
| Separator | 23 |
| First conductive plate | 30 |
| First conductive area | 31 |
| Second conductive area | 32 |
| Second conductive plate | 40 |
| Third conductive area | 41 |
| Fourth conductive area | 42 |
| First layer | 50 |
| First side | 51 |
| Second side | 52 |
| Second layer | 60 |
| First area | 61 |
| Second area | 62 |
| Third layer | 70 |
| Third area | 71 |
| Fourth area | 72 |
| Fourth layer | 80 |
| Electrochemical device | 100 |
| First opening | 120 |
| First edge | 131 |
| Second edge | 132 |
| Conductive portion | 141 |
| Mounting portion | 142 |
| Sealing member | 143 |
| First current collector | 210 |
| First active substance layer | 211 |
| Second active substance layer | 212 |
| Second current collector | 220 |
| Third active substance layer | 221 |
| Fourth active substance layer | 222 |
| First face | 301 |
| Second face | 302 |
| First end portion | 321 |
| Second end portion | 322 |
| Third end portion | 421 |
| Fourth end portion | 422 |
| Fifth surface | 501 |
| Sixth surface | 502 |
| First recess | 503 |
| First sub-area | 611 |
| Second sub-area | 612 |
| Adhesive layer | 601 |
| Substrate | 602 |
| Third sub-area | 711 |
| Fourth sub-area | 712 |
| Second opening | 1410 |
| Winding starting end | 2001 |
| First portion | 2100 |
| First surface | 2101 |
| Second surface | 2102 |
| Second portion | 2200 |
| Third surface | 2201 |
| Fourth surface | 2202 |
| First end | 6120 |
| Second end | 7120 |
| Accommodating cavity | S1 |
| Cavity | S2 |
| Winding center axis | O |
| Notch | C |
| Dimension | d, d₁, d₂, d₃, d₄, d₅ |
| Radius | R |
| First distance | L |
| First intersection point | P1 |
| Second intersection point | P2 |
| First direction | X |
| Second direction | Y |
| Third direction | Z |
| Fourth direction | Y' |
| Fifth direction | Z' |

The following specific embodiments further illustrate this application in conjunction with the above accompanying drawings.

### DETAILED DESCRIPTION

The technical solutions in the embodiments of this application are described clearly and in detail below. It is apparent that the described embodiments are only a part of the embodiments of this application, not all embodiments. Unless otherwise defined, all technical and scientific terms used herein have the same meanings as commonly understood by those skilled in the technical field of this application. The terms used in the specification of this application are for the purpose of describing specific embodiments only and are not intended to limit this application.

Hereinafter, the embodiments of this application are described in detail. However, this application may be embodied in many different forms and should not be construed as limited to the example embodiments set forth herein. Rather, these example embodiments are provided to convey this application thoroughly in detail to those skilled in the art.

Additionally, for brevity and clarity, the sizes or thicknesses of various components and layers in the drawings may be exaggerated. Throughout the text, the same reference numerals refer to the same elements. As used herein, the terms "and/or" and "as well as/or" include any and all combinations of one or more of the associated listed items. Furthermore, it should be understood that when element A is referred to as being "connected" to element B, element A may be directly connected to element B, or there may be an intermediate element C, and elements A and B may be indirectly connected to each other.

Further, when describing the embodiments of this application, the term "may" refers to "one or more embodiments of this application".

The terminology used herein is for the purpose of describing specific embodiments and is not intended to limit this application. As used herein, the singular forms are intended to include the plural forms as well, unless the context clearly indicates otherwise. It should further be understood that the term "include", when used in this specification, refers to the presence of stated features, values, steps, operations, elements, and/or components, but does not preclude the presence or addition of one or more other features, values, steps, operations, elements, components, and/or combinations thereof.

Spatially relative terms, such as "above", may be used herein for convenience of description to describe the relationship of one element or feature to another element(s) or feature(s) as illustrated in the figures. It should be understood that, in addition to the orientation depicted in the figures, spatially relative terms are intended to encompass different orientations of the device or apparatus in use or operation. For example, if the device in the figures is turned over, elements described as "above" or "on" other elements or features would then be oriented "below" or "beneath" the other elements or features. Thus, the exemplary term "above" can encompass both an orientation of above and below. It should be understood that, although the terms first, second, third, etc., may be used herein to describe various elements, components, areas, layers, and/or sections, these elements, components, areas, layers, and/or sections should not be limited by these terms. These terms are used to distinguish one element, component, area, layer, or section from another element, component, area, layer, or section. Thus, a first element, component, area, layer, or section discussed below could be termed a second element, component, area, layer, or section without departing from the teachings of the exemplary embodiments.

As used herein, the terms "parallel" and "perpendicular" describe an ideal state between two components. In actual production or use, an approximate state of parallel or perpendicular may exist between two components. For example, in conjunction with numerical descriptions, parallel may refer to an angle range between two lines within +10°, parallel may also refer to a dihedral angle range between two planes within +10°, and parallel may further refer to an angle range between a line and a plane within +10°. Perpendicular may refer to an angle range between two lines within 90° +10°, perpendicular may also refer to a dihedral angle range between two planes within 90° +10°, and perpendicular may further refer to an angle range between a line and a plane within 90° ±10°. The components described as "parallel" or "perpendicular" may not be absolutely straight lines or planes and may be approximately straight lines or planes, as long as their overall extension direction is macroscopically a straight line or plane, they can be considered as "straight lines" or "planes".

In this application, the design relationships between parameter values such as greater than, less than, or not equal to need to exclude reasonable errors of the measuring equipment.

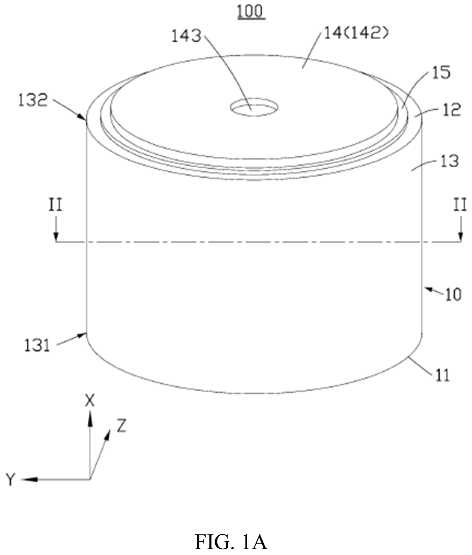

Referring to FIGs. 1A to 2A and FIG. 3, an embodiment of this application provides an electrochemical device 100 including a housing 10, an electrode assembly 20, and an electrolyte (not shown in the figures). The housing 10 includes a first wall 11, a second wall 12, and a side wall 13. The first wall 11 and the second wall 12 are disposed opposite each other in a first direction X. When viewed from the first direction X, the first wall 11 may be substantially circular, and the second wall 12 may also be substantially circular. The first wall 11 and the second wall 12 may be arranged in parallel and both perpendicular to the first direction X. A first edge 131 of the side wall 13 is connected to the first wall 11, and a second edge 132 of the side wall 13 is connected to the second wall 12, so that a substantially cylindrical accommodating cavity S1 is formed within the housing 10. When viewed from the first direction X, the first wall 11 covers the accommodating cavity S1. The electrode assembly 20 and the electrolyte are accommodated in the accommodating cavity S1, and the first direction X is also a direction from the first wall 11 to the electrode assembly 20. In some embodiments, the electrochemical device 100 is a button cell. The side wall 13 and the second wall 12 may be integrally formed, and the second wall 12 and the side wall 13 may be fixed by welding or snap-fitting. The housing 10 may be made entirely of steel. In some embodiments, the steel housing 10 includes elements Fe and C, and the steel housing may further include one or more of elements Ni, Co, Al, Mn, Cr, Cu, Mg, Mo, S, Si, Ti, V, Pb, Sb, N, and P. For example, the first wall 11 is made of steel, and the second wall 12 and the second wall 12 are also made of steel.

In some embodiments, the second wall 12 may further be provided with a conductive member 14 electrically insulated from the second wall 12. For example, the second wall 12 is provided with a first opening 120 communicating with the accommodating cavity S1, and the conductive member 14 may be mounted to the first opening 120 by adhesion, riveting, or the like. The conductive member 14 may include a conductive portion 141 and a mounting portion 142 connected to each other. The conductive portion 141 is disposed within the first opening 120, and the mounting portion 142 is disposed on a surface of the second wall 12 facing away from the first wall 11. Further, a first insulating layer 15 may be provided between the conductive member 14 and the second wall 12, and the first insulating layer 15 is configured to electrically insulate the conductive member 14 from the second wall 12. The first insulating layer 15 may be fixed between the conductive member 14 and the second wall 12 by interference fit. In other embodiments, the first insulating layer 15 may also be fixed between the conductive member 14 and the second wall 12 by riveting or other methods. A material of the first insulating layer 15 may be polyethylene, polypropylene, propylene-ethylene copolymer, polyetheretherketone, polyvinylidene fluoride, or polytetrafluoroethylene.

In some embodiments, the conductive portion 141 may be provided with a second opening 1410. When viewed from the first direction X, the second opening 1410 is located within the first opening 120. The electrolyte may flow into the accommodating cavity S1 through the second opening 1410. To reduce the risk of electrolyte leakage after injection, a sealing member 143 may be installed on the conductive portion 141, and the sealing member 143 covers the second opening 1410.

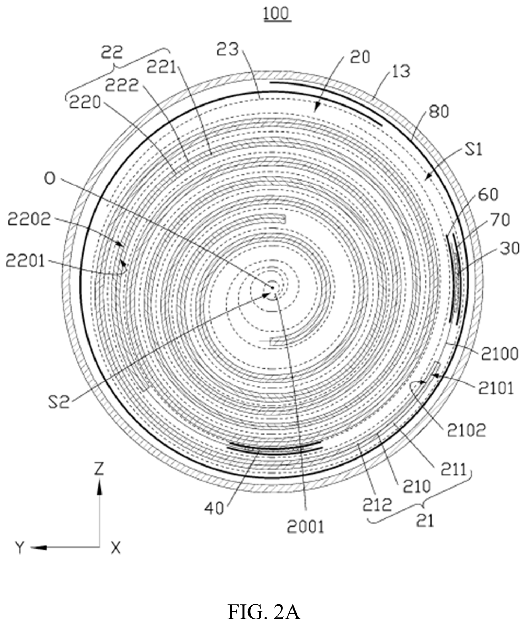

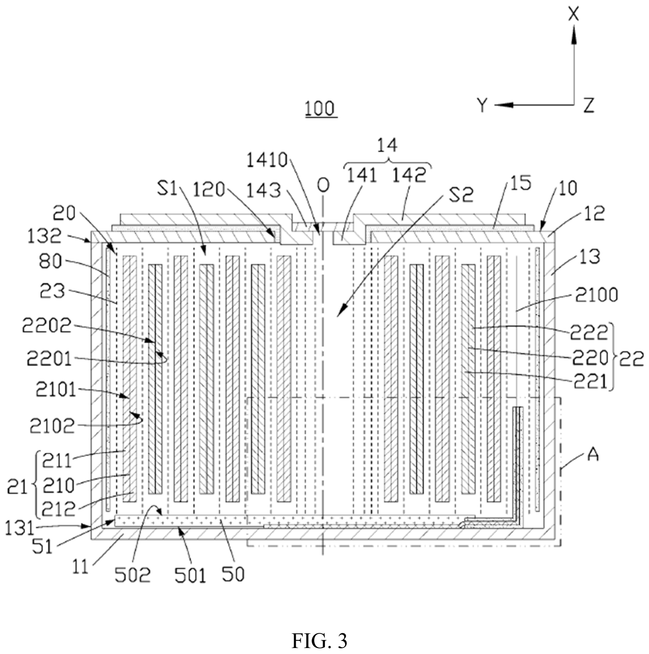

As shown in FIGs. 2A and 3, the electrode assembly 20 is a wound structure and has a winding center axis O. In some embodiments, the first direction X is also a direction of the winding center axis O of the electrode assembly 20. The electrode assembly 20 includes a first electrode sheet 21, a second electrode sheet 22, and a separator 23 disposed between the first electrode sheet 21 and the second electrode sheet 22. The separator 23 is configured to prevent direct contact between the first electrode sheet 21 and the second electrode sheet 22, thereby reducing the possibility of a short circuit caused by contact between the first electrode sheet 21 and the second electrode sheet 22. For simplicity, the separator 23 is shown with dashed lines (composed of multiple spaced short lines). In some embodiments, when viewed from the first direction X, an edge of the electrode assembly 20 may also be substantially circular. In some embodiments, after winding, the separator 23 is located on at least a portion of the outermost layer of the electrode assembly 20. For example, the separator 23 is located at the outermost layer of the electrode assembly 20. The separator 23 can form a protective layer, reducing the risk of a short circuit caused by wear of the electrode sheet inside this portion of the separator 23, thereby increasing the mechanical shock resistance of the electrode assembly 20. In other embodiments, the first electrode sheet 21 or the second electrode sheet 22 may also be located at the outermost layer of the electrode assembly 20.

A winding starting end 2001 of the electrode assembly 20 may be provided with a cavity S2. The winding center axis O runs through the cavity S2 along the first direction X. During preparation, the first electrode sheet 21, the separator 23, and the second electrode sheet 22 may be wound using a winding needle (not shown in the figures), and after the electrode assembly 20 is formed by winding, the winding needle is removed, thereby forming the cavity S2 within the electrode assembly 20. In some embodiments, as shown in FIG. 2A and FIG. 3, the innermost turn of the separator 23 is the winding starting end 2001 of the electrode assembly 20.

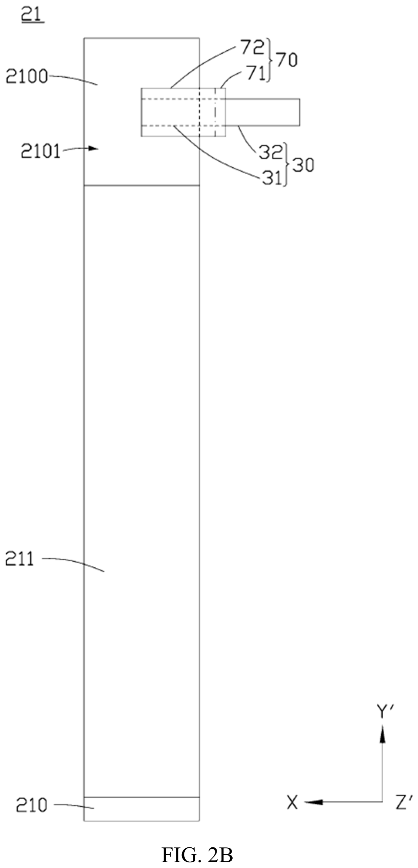

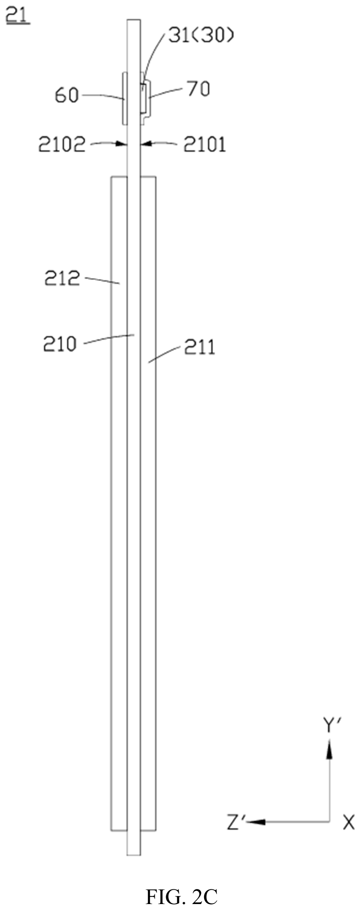

As shown in FIGs. 2B and 2C, when the first electrode sheet 21 is unwound, another three-dimensional coordinate system is established based on the mutually perpendicular first direction X, fourth direction Y', and fifth direction Z'. The fourth direction Y' is defined as an extension direction of the first electrode sheet 21 before winding, and the fifth direction Z' is defined as a thickness direction of the first electrode sheet 21 after unwinding. Referring to FIGs. 2A to 3 together, the first electrode sheet 21 includes a first active substance layer 211, a first current collector 210, and a second active substance layer 212 stacked in sequence. The fifth direction Z' is a stacking direction of the first current collector 210 and the first active substance layer 211 after unwinding. The first current collector 210 includes a first surface 2101 and a second surface 2102 disposed opposite each other, where the first surface 2101 is farther from the winding center axis O than the second surface 2102, the first active substance layer 211 is disposed on the first surface 2101, and the second active substance layer 212 is disposed on the second surface 2102. The first current collector 210 may include aluminum or nickel. In some embodiments, when the first electrode sheet 21 is a negative electrode, the first current collector 210 includes copper. The first active substance layer 211 and the second active substance layer 212 both include an active material, which may be selected from at least one of graphite-based materials, alloy-based materials, lithium metal, or alloys thereof. The graphite-based materials may be selected from at least one of artificial graphite or natural graphite; the alloy-based materials may be selected from at least one of silicon, silicon oxide, tin, or titanium sulfide.

The second electrode sheet 22 includes a third active substance layer 221, a second current collector 220, and a fourth active substance layer 222 stacked in sequence. The second current collector 220 includes a third surface 2201 and a fourth surface 2202 disposed opposite each other, where the third surface 2201 is closer to the winding center axis O than the fourth surface 2202, the third active substance layer 221 is disposed on the third surface 2201, and the fourth active substance layer 222 is disposed on the fourth surface 2202. The second current collector 220 may include copper, nickel, or a carbon-based conductive material. In some embodiments, when the second electrode sheet 22 is a positive electrode, the second current collector 220 includes aluminum foil, where the aluminum foil has relatively weak strength but good conductivity. The third active substance layer 221 and the fourth active substance layer 222 both include an active material, such as at least one of lithium cobalt oxide, lithium manganese oxide, lithium nickel oxide, lithium nickel cobalt manganese oxide, lithium iron phosphate, lithium manganese iron phosphate, lithium vanadium phosphate, lithium vanadium oxide phosphate, lithium-rich manganese-based materials, or lithium nickel cobalt aluminate.

The separator 23 includes at least one of polyethylene, polypropylene, polyvinylidene fluoride, polyethylene terephthalate, polyimide, or aramid.

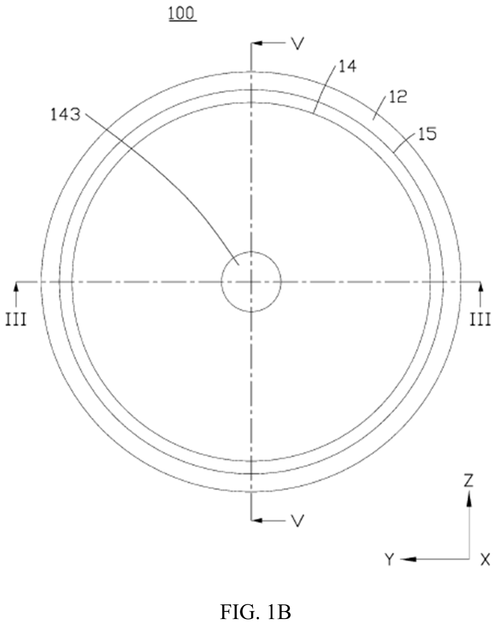

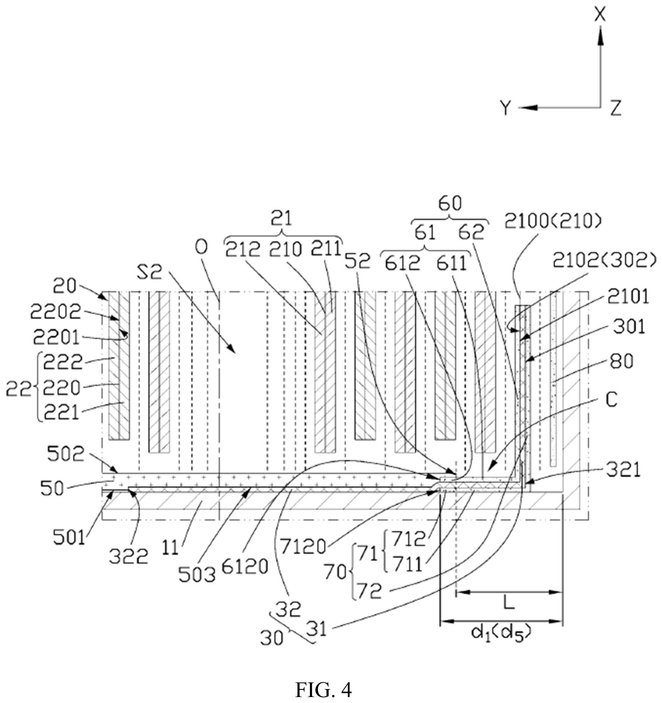

Referring to FIGs. 3 and 4 together, the electrochemical device 100 further includes a first conductive plate 30. FIG. 3 is a cross-sectional view of the electrochemical device shown in FIG. 1B along III-III, and FIG. 4 is an enlarged view of the electrochemical device shown in FIG. 3 at position A. Referring to FIGs. 1A and 1B together, when a cross-section of the electrochemical device 100 is taken along III-III, the cross-section includes the first conductive plate 30, that is, the cross-section shown in FIGs. 3 and 4 includes the first conductive plate 30. The first conductive plate 30 includes a first conductive area 31 and a second conductive area 32 connected to each other. The second conductive area 32 is bent with respect to the first conductive area 31. Referring to FIGs. 2B and 2C together, the first conductive area 31 is connected to the first electrode sheet 21 (for example, connected to the first current collector 210 of the first electrode sheet 21), and the first conductive area 31 may extend out of the first electrode sheet 21 along the first direction X. The second conductive area 32 is connected to the first wall 11. In the first direction X, the second conductive area 32 is disposed between the first wall 11 and the electrode assembly 20. The second conductive area 32 includes a first end portion 321 connected to the first conductive area 31 and a second end portion 322 facing away from the first end portion 321, and the second conductive area 32 extends from the first end portion 321 along a second direction Y. For example, the second direction Y is a direction from the first end portion 321 to the second end portion 322. When viewed from a third direction Z perpendicular to the first direction X and the second direction Y, the first conductive plate 30 is bent at the first end portion 321, and the first conductive area 31 may be substantially perpendicular to the second conductive area 32. When viewed from the first direction X, the bent portion between the first conductive area 31 and the second conductive area 32 overlaps with the electrode assembly 20. As shown in FIG. 4, the first conductive plate 30 includes a first face 301 facing the housing 10 and a second face 302 facing the electrode assembly 20. Since the first conductive plate 30 is bent, the first face 301 and the second face 302 are not planar, and the first face 301 and the second face 302 are bent surfaces.

In some embodiments, the first current collector 210 includes a first portion 2100, the first surface 2101 of the first portion 2100 is separated from the first active substance layer 211, and the first conductive area 31 is connected to the first surface 2101 of the first portion 2100. The first conductive area 31 is connected to the first portion 2100 separated from the first active substance layer 211, reducing the impact of the first conductive area 31 on the energy density of the electrochemical device 100 in the second direction Y, and reducing the impact of the first conductive area 31 on the overall flatness of the electrode assembly 20. Further, in the second direction Y, the first conductive area 31 may be disposed on a surface of the first portion 2100 facing the side wall 13 (that is, the first surface 2101 of the first portion 2100). With the first conductive area 31 disposed on the surface of the first portion 2100 facing the side wall 13, due to the blocking effect of the first portion 2100, the possibility of burrs on the first conductive area 31 (for example, burrs may be formed during the cutting process of the first conductive plate 30, but this application is not limited thereto) piercing the separator 23 and causing a short circuit due to direct contact between the first electrode sheet 21 and the second electrode sheet 22 is reduced. The second surface 2102 of the first portion 2100 may also be separated from the second active substance layer 212, and the first portion 2100 may be a tail foil-uncoated area of the first electrode sheet 21. To improve connection strength, the first conductive area 31 may be welded to the first surface 2101 of the first portion 2100, and the second conductive area 32 may be welded to the first wall 11.

In some embodiments, when viewed from the first direction X, the second conductive area 32 overlaps with the winding center axis O of the electrode assembly 20. Since the second conductive area 32 extends to overlap with the winding center axis O, the second conductive area 32 has a relatively large dimension in the second direction Y, helping improve the connection strength between the second conductive area 32 and the first wall 11.

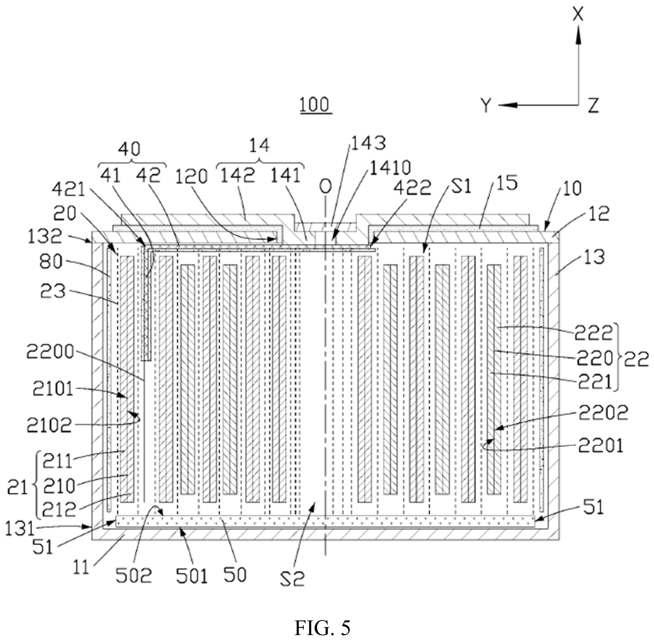

Referring to FIG. 5, the electrochemical device 100 further includes a second conductive plate 40. FIG. 5 is a cross-sectional view of the electrochemical device shown in FIG. 1B along V-V. Referring to FIGs. 1A and 1B together, when a cross-section of the electrochemical device 100 is taken along V-V, the cross-section includes the second conductive plate 40, that is, the cross-section shown in FIG. 5 includes the second conductive plate 40. The second conductive plate 40 includes a third conductive area 41 and a fourth conductive area 42 connected to each other. The third conductive area 41 is connected to the second electrode sheet 22 (for example, connected to the second current collector 220 of the second electrode sheet 22), and the third conductive area 41 may extend out of the second electrode sheet 22 along the first direction X. The fourth conductive area 42 is connected to the conductive member 14 (for example, connected to the conductive portion 141 of the conductive member 14). In the first direction X, the fourth conductive area 42 is disposed between the second wall 12 and the electrode assembly 20. The fourth conductive area 42 includes a third end portion 421 connected to the third conductive area 41 and a fourth end portion 422 facing away from the third end portion 421, and the fourth conductive area 42 extends from the third end portion 421 along the second direction Y.

In some embodiments, the second current collector 220 includes a second portion 2200, the third surface 2201 of the second portion 2200 is separated from the third active substance layer 221, and the third conductive area 41 is connected to the third surface 2201 of the second portion 2200. The third conductive area 41 is connected to the second portion 2200 separated from the third active substance layer 221, reducing the impact of the third conductive area 41 on the energy density of the electrochemical device 100 in the second direction Y, and reducing the impact of the third conductive area 41 on the overall flatness of the electrode assembly 20. The fourth surface 2202 of the second portion 2200 may also be separated from the fourth active substance layer 222, and the second portion 2200 may be a tail foil-uncoated area of the second electrode sheet 22. To improve connection strength, the third conductive area 41 may be welded to the third surface 2201 of the second portion 2200, and the fourth conductive area 42 may be welded to the conductive member 14.

The second conductive area 32 is connected to the first wall 11 and the fourth conductive area 42 is connected to the conductive member 14, so that the first wall 11 and the conductive member 14 exhibit opposite electrode polarities, enabling the electrochemical device 100 to supply power to external components (not shown in the figures). When the first electrode sheet 21 is a negative electrode sheet and the second electrode sheet 22 is a positive electrode sheet, the first wall 11, the side wall 13, and the second wall 12 collectively exhibit negative polarity, and the conductive member 14 exhibits positive polarity.

As shown in FIGs. 3 to 5, the electrochemical device 100 further includes a first layer 50 containing an insulating material. In the first direction X, the first layer 50 is disposed between the electrode assembly 20 and the second conductive area 32. The first layer 50 is configured to insulate the electrode assembly 20 from the first wall 11, reducing the possibility of a short circuit caused by direct contact between the second electrode sheet 22 and the first wall 11. The first layer 50 can also cover burrs on the second conductive area 32 (for example, burrs may be formed during the cutting process of the first conductive plate 30, but this application is not limited thereto), reducing the possibility of the burrs piercing the separator 23 and causing a short circuit due to direct contact between the first electrode sheet 21 and the second electrode sheet 22. The insulating material of the first layer 50 may be selected from at least one of polypropylene, polyethylene, polyvinylidene fluoride, vinylidene fluoride-hexafluoropropylene copolymer, polymethyl methacrylate, or polyethylene glycol.

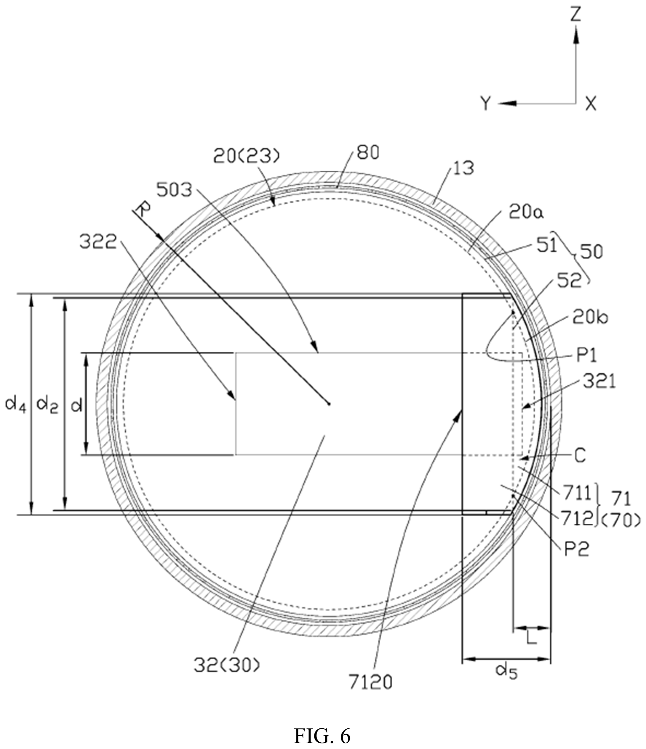

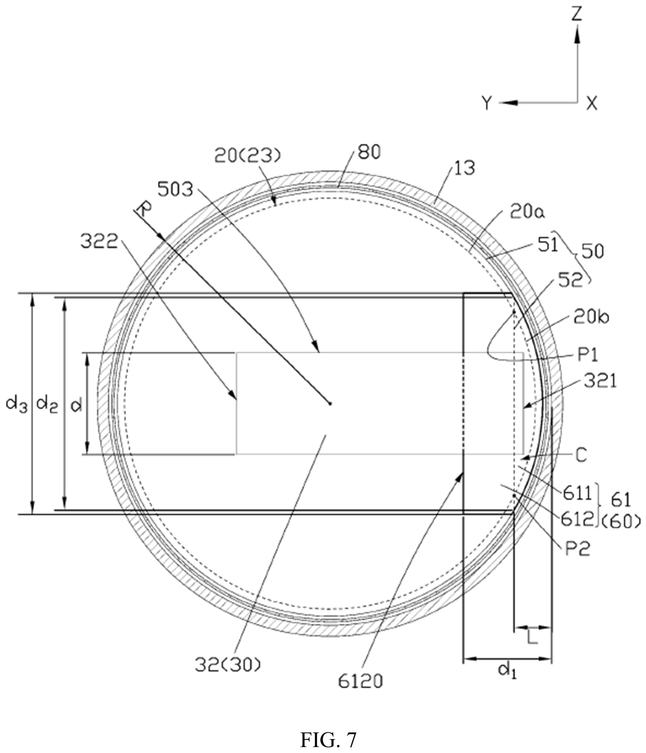

As shown in FIG. 4, in some embodiments, the first layer 50 includes a fifth surface 501 facing the first wall 11 and a sixth surface 502 facing the electrode assembly 20. The fifth surface 501 and the sixth surface 502 are disposed opposite each other. The fifth surface 501 of the first layer 50 includes a first recess 503, and the first recess 503 does not penetrate the sixth surface 502 along the first direction X. At least a portion of the second conductive area 32 is disposed within the first recess 503, and the second face 302 of the second conductive area 32 is connected to the bottom surface of the first recess 503. In the first direction X, the second face 302 of the second conductive area 32 is located between the fifth surface 501 and the sixth surface 502 of the first layer 50. To facilitate welding the second conductive area 32 to the first wall 11, in the first direction X, the first face 301 of the second conductive area 32 may be farther from the electrode assembly 20 than the fifth surface 501 of the first layer 50. As shown in FIG. 4, a portion of the second conductive area 32 including the second end portion 322 may be disposed within the first recess 503. The first layer 50 is in contact with the second conductive area 32 at the first recess 503. In this way, on the premise of ensuring the thickness of the first layer 50, the total thickness of the second conductive area 32 and the first layer 50 in the first direction X can be reduced, thereby facilitating an increase in energy density. Further, referring to FIGs. 6 and 7, when viewed from the first direction X, an edge of the first recess 503 may overlap with an edge of the second conductive area 32. In this way, on the premise of allowing part of the second conductive area 32 to be disposed within the first recess 503, the impact of an excessively large size of the first recess 503 on the insulation effect of the first layer 50 is reduced, so that the first layer 50 can sufficiently insulate the electrode assembly 20 from the first wall 11 after the first recess 503 is provided.

Referring to FIGs. 6 and 7, when viewed from the first direction X, the first layer 50 includes a first side 51 extending in a curved manner along the edge of the electrode assembly 20 and a second side 52 connected to the first side 51. As shown in FIGs. 6 and 7, the outermost layer of the electrode assembly 20 is the separator 23, the separator 23 being the edge of the electrode assembly 20 when viewed from the first direction X. The edge of the electrode assembly 20 when viewed from the first direction X may be divided into a first segment 20a and a second segment 20b connected to each other (when viewed from the first direction X, the edge of the electrode assembly 20 and the second side 52 intersect at a first intersection point P1 and a second intersection point P2, and the first intersection point P1 and the second intersection point P2 divide the edge of the electrode assembly 20 into the first segment 20a and the second segment 20b). The first side 51 is disposed opposite the first segment 20a, and the second side 52 is disposed opposite the second segment 20b. In this application, the first side 51 extending in a curved manner along the edge of the electrode assembly 20 means that the extension direction of the first side 51 is consistent or substantially consistent with the extension direction of the first segment 20a. When the edge of the electrode assembly 20 is substantially circular when viewed from the first direction X, the first segment 20a is an arc segment, that is, a part of a curved circumference, and the first side 51 may also be correspondingly arranged as an arc segment. When the shape of the edge of the electrode assembly 20 changes, the shape of the first side 51 may also vary. As shown in FIGs. 6 and 7, to enable the first layer 50 to sufficiently insulate the second electrode sheet 22 from the first wall 11, when viewed from the first direction X, the first side 51 may be located outside the electrode assembly 20, where the radius of the circumference defined by the first side 51 is greater than the radius of the circumference defined by the first segment 20a, and the distance between the first side 51 and the first segment 20a may remain consistent or substantially consistent along the extension direction of the first side 51. In other embodiments, when viewed from the first direction X, the first side 51 may also substantially coincide with the first segment 20a.

When viewed from the first direction X, the second side 52 overlaps with the electrode assembly 20, and the second side 52 is farther from the edge of the electrode assembly 20 than the first side 51. Therefore, the second side 52 deviates from the circumference defined by the first side 51, and the second side 52 is located inside the circumference defined by the first side 51. The second side 52 may be a straight line or may include a curved portion. In some embodiments, the second side 52 is a straight line and extends along the third direction Z. When viewed from the first direction X, the first end portion 321 of the second conductive area 32 is spaced apart from the first layer 50 in the second direction Y, and the second end portion 322 overlaps with the first layer 50. When viewed from the first direction X, the second conductive area 32 extends from the first end portion 321 along the second direction Y beyond the second side 52. Since the second side 52 is farther from the edge of the electrode assembly 20 than the first side 51, the second side 52 deviates from the circumference defined by the first side 51, so the first layer 50 has a notch C when viewed from the first direction X, and the second side 52 is the edge of the notch C. When viewed from the first direction X, the first end portion 321 of the second conductive area 32 may be located within the notch C, thereby reducing the possibility of friction between the first end portion 321 and the side wall 13.

As shown in FIGs. 6 and 7, in some embodiments, a dimension of the second side 52 in the third direction Z is d₂, a dimension of the second conductive area 32 in the third direction Z is d, and d₂ > d. In this way, the first layer 50 can sufficiently cover the second conductive area 32, reducing the possibility of burrs on the second conductive area 32 piercing the separator 23 and causing a short circuit due to direct contact between the first electrode sheet 21 and the second electrode sheet 22. Moreover, since the dimension of the second side 52 is relatively large, the first layer 50 can sufficiently insulate the second electrode sheet 22 from the first wall 11, reducing the possibility of a short circuit caused by direct contact between the second electrode sheet 22 and the first wall 11.

The measurement steps for d and d₂ may be as follows: (1) Perform a two-dimensional projection and scanning test on the electrochemical device 100 from the first direction X using X-rays. Instruments or equipment known to those skilled in the art (for example, GE Phoenix vtomex S equipment) may be used to obtain a CT image. (2) Directly measure the values of d and d₂ using a caliper or other suitable measuring tools.

The measurement steps for d and d₂ may also be as follows: (1) Discharge the electrochemical device 100 at 0.2C to 2.75 V. (2) Cut the side wall 13 of the housing 10 near the first edge 131 along a cross-section perpendicular to the first direction X, and after most of the side wall 13 is separated from the first wall 11, open the first wall 11 with respect to the first layer 50, at which point the second conductive area 32 remains connected to the first wall 11. (3) Directly measure the values of d and d₂ using a caliper or other suitable measuring tools.

The measurement steps for d and d₂ may further be as follows: (1) Discharge the electrochemical device 100 at 0.2C to 2.75 V. (2) Prepare a resin composition consisting of a crystal resin matrix (for example, epoxy resin), a catalyst, and a curing agent mixed in a certain proportion. (3) Pour the resin composition into a mold, place the electrochemical device 100 in the mold, and continue to slowly pour the resin composition until the electrochemical device 100 is entirely immersed in the resin composition. (4) Remove the electrochemical device 100 and leave it standing until the resin composition solidifies. (5) Polish the first wall 11 of the housing 10 until the second conductive area 32 is exposed on the polished surface. (6) Directly measure the values of d and d₂ using a caliper or other suitable measuring tools.

As shown in FIGs. 4 and 7, the electrochemical device 100 further includes a second layer 60 containing an insulating material. The second layer 60 covers the first conductive plate 30, and when viewed from the first direction X, the second layer 60 covers the notch C, thereby further reducing the possibility of a short circuit caused by arrangement of the notch C in the first layer 50. The second layer 60 includes a first area 61 covering the second conductive area 32. When viewed from the first direction X, the first area 61 covers the notch C. In some embodiments, the second layer 60 covers the second face 302 of the first conductive plate 30, and the first area 61 is disposed between the second conductive area 32 and the electrode assembly 20 in the first direction X. The first area 61 is configured to further insulate the electrode assembly 20 from the first wall 11, thereby reducing the possibility of a short circuit caused by direct contact between the second electrode sheet 22 and the first wall 11. When the first area 61 is disposed between the second conductive area 32 and the electrode assembly 20 in the first direction X, the second layer 60 can also cover burrs on the second conductive area 32, reducing the possibility of the burrs piercing the separator 23 and causing a short circuit due to direct contact between the first electrode sheet 21 and the second electrode sheet 22. That is, the first area 61 of the second layer 60 is configured to cooperate with the first layer 50 to insulate the electrode assembly 20 from the first wall 11 and to cover burrs on the second conductive area 32, reducing the possibility of a short circuit. In this embodiment, the first area 61 includes a first sub-area 611 and a second sub-area 612 connected to each other. When viewed from the first direction X, the first sub-area 611 is located between the second conductive area 32 and the electrode assembly 20, and the first sub-area 611 overlaps with the notch C. When viewed from the first direction X, the second sub-area 612 overlaps with the first layer 50. The second sub-area 612 overlaps with the first layer 50, so that the first area 61 can sufficiently cover the notch C. The second sub-area 612 may also be disposed within the first recess 503. The insulating material of the second layer 60 may be selected from at least one of polypropylene, polyethylene, polyvinylidene fluoride, vinylidene fluoride-hexafluoropropylene copolymer, polymethyl methacrylate, or polyethylene glycol. The second layer 60 may be a single-sided adhesive tape or double-sided adhesive tape containing an insulating material. In other embodiments, the second layer 60 may alternatively be a ceramic coating.

As shown in FIGs. 4 and 7, a distance between the second side 52 and the side wall 13 in the second direction Y is a first distance L, the second sub-area 612 has a first end 6120 facing away from the first sub-area 611 in the second direction Y, a dimension between the first end 6120 and the side wall 13 in the second direction Y is d₁, and L < d₁. It can be understood that L is the distance in the second direction Y between the second side 52 and a portion of the side wall 13 on the side of the notch C facing away from the second side 52; d₁ is the distance in the second direction Y between the first end 6120 and a portion of the side wall 13 on the side of the notch C facing away from the second side 52. The measurement steps for L and d₁ may be similar to those for d and d₂.

As shown in FIG. 7, in some embodiments, a dimension of the second side 52 in the third direction Z is d₂, a dimension of the first area 61 in the third direction Z is d₃, and d₂ < d₃. Thus, the first area 61 can sufficiently cover the notch C in the third direction Z, enabling the first area 61 to cooperate with the first layer 50 to insulate the electrode assembly 20 from the first wall 11 and to cover burrs on the second conductive area 32, reducing the possibility of a short circuit.

Further, in some embodiments, the second layer 60 may further include a second area 62 connected to the first area 61. The second area 62 is configured to cover burrs on the first conductive area 31, further reducing the possibility of the burrs piercing the separator 23 and causing a short circuit due to direct contact between the first electrode sheet 21 and the second electrode sheet 22. It can be understood that for simplicity, FIG. 7 only shows the first area 61 of the second layer 60 and does not show the second area 62 of the second layer 60.

Considering that when viewed from the first direction X, the bent portion between the first conductive area 31 and the second conductive area 32 overlaps with the electrode assembly 20, in this application, the second side 52 is disposed farther from the edge of the electrode assembly 20 than the first side 51, so that the second side 52 can avoid the bent portion between the first conductive area 31 and the second conductive area 32. In this way, when the electrochemical device 100 is subjected to mechanical abuse (for example, impact or drop), the interference and compression exerted by the first layer 50 on the bent portion between the first conductive area 31 and the second conductive area 32 can be reduced. This reduces the possibility of stress-induced fracture of the first conductive plate 30 at the bent portion and the possibility of failure of the electrochemical device 100, as well as reducing the possibility of a short circuit caused by a sharp end formed after fracture of the first conductive plate 30 piercing the separator 23 and causing direct contact between the first electrode sheet 21 and the second electrode sheet 22. Therefore, the reliability and service life of the electrochemical device 100 are improved. When the electrochemical device 100 is a button cell, since the button cell typically has a small volume, in this implementation, it is unnecessary to reduce the size of the electrode assembly 20 to reduce the compression exerted by the first layer 50 on the bent portion of the first conductive plate 30 (for example, by reducing the size of the electrode assembly 20 to increase the gap between the electrode assembly 20 and the housing 10, providing more buffer space for the electrode assembly 20 during mechanical abuse to reduce the compression exerted by the first layer 50 on the bent portion of the first conductive plate 30), facilitating an increase in energy density.

Furthermore, in this application, the first area 61 of the second layer 60 covers the notch C, so that the first area 61 can cooperate with the first layer 50 to insulate the electrode assembly 20 from the first wall 11, reducing the possibility of a short circuit caused by arrangement of the notch C in the first layer 50. Additionally, since the first area 61 covers the second side 52 of the first layer 50, the second layer 60 can also reduce the possibility of curling at the second side 52 and prevent the first layer 50 from moving within the housing 10.

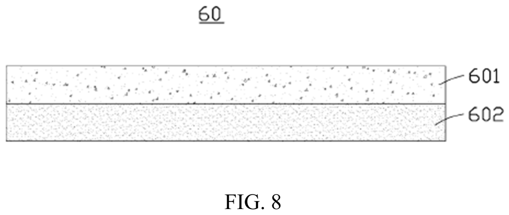

Referring to FIGs. 4, 7, and 8 together, in some embodiments, the second layer 60 is a single-sided adhesive tape adhered to the first conductive plate 30. The second layer 60 includes a stacked adhesive layer 601 and a substrate 602. The adhesive layer 601 includes an insulating material. The substrate 602 is adhered to the first conductive plate 30 via the adhesive layer 601. With the second layer 60 covering the notch C of the first layer 50, since the second layer 60 is not adhered to the electrode assembly 20, the injected electrolyte between the first layer 50 and the first wall 11 can flow through the notch C and sufficiently wet the electrode assembly 20, thereby improving the interface during cycling, reducing capacity decay caused by lithium precipitation, black spots, purple spots, and the like, and enhancing the cycling performance of the electrochemical device 100. Further, in some embodiments, 0.4 d₁ < L < d₁ may be set, thereby reducing the possibility that when the L value is too small, the size of the notch C is small, and the injected electrolyte between the first layer 50 and the first wall 11 cannot easily flow through the notch C and sufficiently wet the electrode assembly 20. This improves the wetting effect of the electrode assembly 20, thereby improving the interface during cycling and reducing capacity decay caused by lithium precipitation, black spots, purple spots, and the like. A material of the substrate 602 may be selected from at least one of polyimide or polyethylene terephthalate. The insulating material of the adhesive layer 601 may be selected from at least one of butadiene, isoprene, styrene, methyl methacrylate, butyl methacrylate, isooctyl acrylate, or butyl acrylate.

Since the second layer 60 is designed as a single-sided adhesive tape adhered to the first conductive plate 30 and a relationship between d₁ and L can be further reasonably set, the injected electrolyte between the first layer 50 and the first wall 11 can flow through the notch C and sufficiently wet the electrode assembly 20. Therefore, in some embodiments, when viewed from the first direction X, the first layer 50 may cover the cavity S2 of the electrode assembly 20. That is, this application does not require an opening to be provided in the first layer 50 at a position corresponding to the cavity S2 to allow the electrolyte to sufficiently wet the electrode assembly 20, thereby reducing the possibility that weld marks or weld slag of the first conductive area 31 comes into contact with the second electrode sheet 22 through the opening to affect the service life of the electrochemical device 100.

As shown in FIGs. 3 and 4, in some embodiments, the electrochemical device 100 further includes a third layer 70 containing an insulating material. The third layer 70 covers the first face 301 of the first conductive plate 30, and when viewed from the first direction X, the third layer 70 covers at least a portion of the notch C, thereby further reducing the possibility of a short circuit caused by arrangement of the notch C in the first layer 50. The third layer 70 includes a third area 71 disposed between the second conductive area 32 and the first wall 11 in the first direction X. When viewed from the first direction X, the third area 71 covers at least a portion of the notch C. The third area 71 is configured to further insulate the electrode assembly 20 from the first wall 11, thereby reducing the possibility of a short circuit due to direct contact between the second electrode sheet 22 and the first wall 11. That is, the third area 71 of the third layer 70 is configured to cooperate with the first layer 50 to insulate the electrode assembly 20 from the first wall 11, reducing the possibility of a short circuit. In this embodiment, the third area 71 includes a third sub-area 711 and a fourth sub-area 712 connected to each other. When viewed from the first direction X, the third sub-area 711 overlaps with the notch C. When viewed from the first direction X, the fourth sub-area 712 overlaps with the first layer 50. By arranging the fourth sub-area 712 to overlap with the first layer 50, the third area 71 and the first area 61 can collectively sufficiently cover the notch C, further reducing the possibility of a short circuit. The insulating material of the third layer 70 may be selected from at least one of polypropylene, polyethylene, polyvinylidene fluoride, vinylidene fluoride-hexafluoropropylene copolymer, polymethyl methacrylate, or polyethylene glycol.

The fourth sub-area 712 has a second end 7120 facing away from the third sub-area 711 in the second direction Y, a dimension between the second end 7120 and the side wall 13 in the second direction Y is d₅, and L < d₅. In some embodiments, d₅ may be substantially equal to d₁. It can be understood that d₅ is a distance in the second direction Y between the second end 7120 and a portion of the side wall 13 on the side of the notch C facing away from the second side 52.

As shown in FIGs. 4 and 6, in some embodiments, a radius of the first wall 11 is R (it can be understood that the radius R of the side wall 13 shown in FIG. 6 is the radius of the first wall 11), and d₅ < 0.4R. This can reduce the impact of the third area 71 on the connection area (for example, the welding area) between the second conductive plate 40 and the first wall 11, reducing the possibility of the third area 71 interfering with the connection area and causing failure of the connection area.

In some embodiments, a dimension of the second side 52 in the third direction Z is d₂, a dimension of the third area 71 in the third direction Z is d₄, and d₂ < d₄. This enables the third area 71 to sufficiently cover the notch C in the third direction Z, allowing the third area 71 to cooperate with the first layer 50 to insulate the electrode assembly 20 from the first wall 11, reducing the possibility of a short circuit. In some embodiments, d₄ may be substantially equal to d₃.

As shown in FIGs. 4 and 6, further, in some embodiments, the third layer 70 may further include a fourth area 72 connected to the third area 71. As shown in FIG. 4, in the second direction Y, the fourth area 72 is located on the first face 301 of the first conductive area 31. The fourth area 72 is configured to cover burrs or weld marks on the first conductive area 31. The third layer 70 may be a single-sided adhesive tape or double-sided adhesive tape including an insulating material. In other embodiments, the third layer 70 may alternatively be a ceramic coating. It can be understood that for simplicity, FIG. 6 only shows the third area 71 of the third layer 70 and does not show the fourth area 72 of the third layer 70.

As shown in FIGs. 3 to 5, in some embodiments, the electrochemical device 100 may further include a fourth layer 80 containing an insulating material. In the first direction X, the fourth layer 80 is disposed between the electrode assembly 20 and the side wall 13. The fourth layer 80 can reduce the possibility of a short circuit due to direct contact between the second electrode sheet 22 and the side wall 13 (for example, burrs on the second electrode sheet 22 piercing the separator 23 at the outermost layer and coming into contact with the side wall 13). As shown in FIG. 2A, the fourth layer 80 may be a continuous annular structure. In some embodiments, the insulating material of the fourth layer 80 may be selected from at least one of polypropylene, polyethylene, polyvinylidene fluoride, vinylidene fluoride-hexafluoropropylene copolymer, polymethyl methacrylate, or polyethylene glycol.

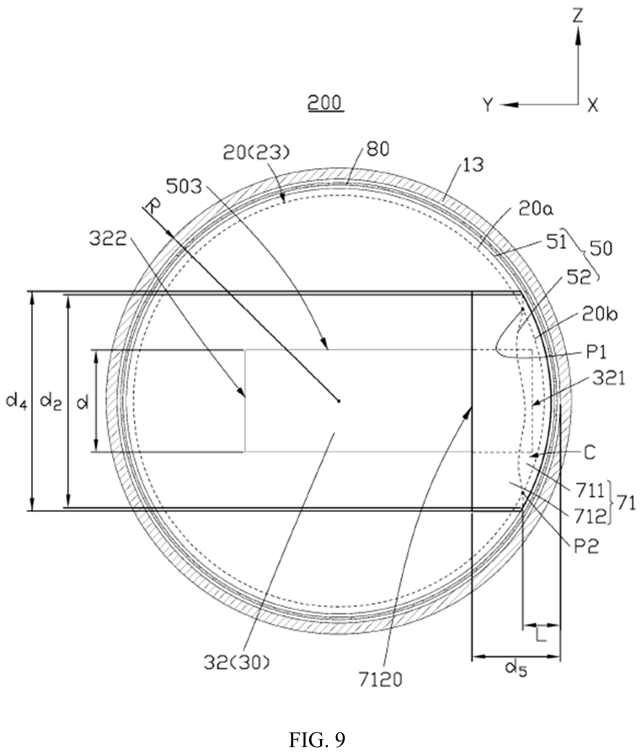

Referring to FIG. 9, another embodiment of this application further provides an electrochemical device 200, which differs from the electrochemical device 100 in that the second side 52 includes a curved portion. Considering that a cutout may be formed on the second side 52 during cutting of the notch C in the first layer 50, the second side 52 is designed to include a curved portion, reducing the possibility of the cutout expanding further to form cracks during the installation of the first layer 50.

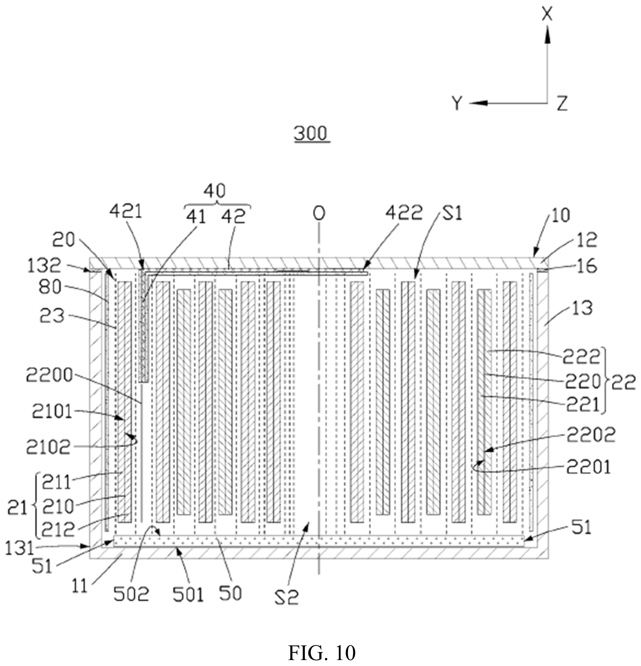

Referring to FIG. 10, another embodiment of this application further provides an electrochemical device 300, which differs from the electrochemical device 100 described above in that the first wall 11 is electrically insulated from the second wall 12. For example, the side wall 13 and the second wall 12 may be integrally formed, and the second wall 12 and the side wall 13 may be fixed by adhesion via a second insulating layer 16. The second insulating layer 16 electrically insulates the first wall 11 from the side wall 13 and also electrically insulates the first wall 11 from the second wall 12.

In this case, the fourth conductive area 42 of the second conductive plate 40 is connected to the second wall 12. The first wall 11 and the second wall 12 exhibit opposite electrode polarities, enabling the electrochemical device 300 to supply power to external components. When the first electrode sheet 21 is a negative electrode sheet and the second electrode sheet 22 is a positive electrode sheet, the first wall 11 and the side wall 13 exhibit negative polarity, and the second wall 12 exhibits positive polarity.

The electrochemical devices 100, 200, and 300 of this application include all devices capable of undergoing electrochemical reactions. Specifically, the electrochemical devices 100, 200, and 300 include all types of primary batteries, secondary batteries, fuel cells, solar cells, and capacitors (for example, supercapacitors). Optionally, the electrochemical devices 100, 200, and 300 may be lithium secondary batteries, including lithium metal secondary batteries, lithium-ion secondary batteries, lithium polymer secondary batteries, and lithium-ion polymer secondary batteries.

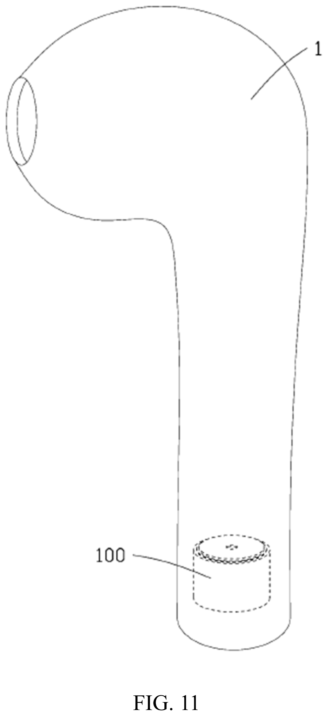

Referring to FIG. 11, an embodiment of this application further provides an electronic device 1 including the electrochemical device 100 (or the electrochemical device 200 or 300) described above. The electronic device 1 is powered by the electrochemical device 100, and the electrochemical device 100 has the second side 52 disposed farther from the edge of the electrode assembly 20 than the first side 51, reducing the possibility of fracture of the first conductive plate 30, thereby maintaining high reliability and service life. In one embodiment, the electronic device 1 of this application may include, but is not limited to, a notebook computer, a pen-input computer, a mobile computer, an e-book reader, a portable phone, a portable fax machine, a portable copier, a portable printer, a head-mounted stereo headphone, a video recorder, an LCD television, a portable cleaner, a portable CD player, a mini-disc player, a transceiver, an electronic organizer, a calculator, a memory card, a portable recorder, a radio, a backup power supply, a motor, an automobile, a motorcycle, an assisted bicycle, a bicycle, a lighting fixture, a toy, a gaming console, a clock, an electric tool, a flashlight, a camera, a large household battery, a lithium-ion capacitor, and the like.

The performance of the electrochemical device 100 provided by this application is described below through specific examples and comparative examples. Taking the electrochemical device 100 as a button-type lithium-ion battery as an example, this application is described in conjunction with specific preparation processes and testing methods. Those skilled in the art should understand that the preparation methods described in this application are merely examples, and any other suitable preparation methods are within the scope of this application.

### Example 1

(1) Preparation of the first electrode sheet 21: Artificial graphite as the negative active material, conductive carbon black (Super P), and styrene-butadiene rubber (SBR) were mixed at a weight ratio of 96:1.5:2.5, added with deionized water as a solvent to prepare a slurry with a weight percentage of 70wt%. The slurry was stirred uniformly and evenly applied to one surface of a 10 µm-thick negative current collector copper foil which was then dried at 110°C to obtain a negative electrode sheet with a coating thickness of 150 µm, coated with a negative active material layer on one side. The above steps were repeated on the other surface of the negative electrode sheet to obtain a negative electrode sheet coated with the negative active material layer on both sides. Then, the first conductive plate 30 was welded on the exposed area of the first current collector 210, and the protective adhesive tapes, such as the second layer 60 and the third layer 70, were applied to the weld marks on both sides of the first conductive plate 30. The second layer 60 and the third layer 70 are single-sided adhesive tapes, with the adhesive layer of the second layer 60 and the adhesive layer of the third layer 70 both facing the first conductive plate 30.
(2) Preparation of the second electrode sheet 22: Lithium cobalt oxide (LiCoO₂) as the positive active material, conductive carbon black (Super P), and polyvinylidene fluoride (PVDF) were mixed at a weight ratio of 97.5:1.0:1.5, added N-methylpyrrolidone (NMP) as a solvent to prepare a slurry with a solid content of 75wt%. The slurry was stirred uniformly and evenly applied to one surface of a 12 µm-thick positive current collector aluminum foil which was then dried at 90°C to obtain a positive electrode sheet with a positive active material layer thickness of 100 µm. The slurry was evenly applied on that surface, followed by drying at 90°C to obtain a positive electrode sheet coated with the positive active material layer on both sides. Then, the second conductive plate 40 was welded on the exposed area of the second current collector 220, and the protective adhesive tape was attached to the second conductive plate 40.
(3) Preparation of the electrolyte: In a dry argon atmosphere, the organic solvents ethylene carbonate (EC), ethyl methyl carbonate (EMC), and diethyl carbonate (DEC) were mixed at a mass ratio of EC:EMC:DEC = 30:50:20, and then lithium salt lithium hexafluorophosphate (LiPF₆) was added to the organic solvent, dissolved, and mixed to uniformity to obtain an electrolyte with a lithium salt concentration of 1.15 mol/L.
(4) Preparation of the battery: The first electrode sheet 21, the separator 23, and the second electrode sheet 22 were stacked in sequence and wound to obtain the electrode assembly 20. A 15 µm-thick polyethylene (PE) film was used as the separator 23. Then, the first layer 50 and the electrode assembly 20 were sequentially placed into the accommodating cavity S1 formed by the first wall 11 and the side wall 13, the first conductive plate 30 and the second conductive plate 40 are separately bent and welded, where the second side 52 of the first layer 50 was farther from the edge of the electrode assembly 20 than the first side 51, so that the second side 52 can avoid the bent portion of the first conductive plate 30, and the second layer 60 extends to the first area 61 to overlap with the first layer 50 in the first direction X, satisfying L = 0.3 d₁. Finally, electrolyte injection and packaging were performed to obtain the battery.

### Examples 2-4

The difference from Example 1 lies in the relationship between L and d₁.

### Example 5

The difference from Example 1 lies in that the third layer 70 also extends to overlap with the first layer 50 in the first direction X.

### Comparative Example

The difference from Example 1 lies in that when viewed from the first direction X, the first area 61 of the second layer 60 does not overlap with the first layer 50, and L = 1.1 d₁.

Drop tests, drum drop tests, and cycle tests were performed on the batteries of each example and comparative example, and the test results were recorded in Table 1 and Table 2 below.

The drop test steps are as follows:
(1) Under an ambient condition of 25±5°C, the battery was charged at 0.2C to the charge limit voltage. (2) The battery was placed in a dedicated drop test fixture, the sample was grabbed using a mechanical arm, and the bottom, side, and top surfaces of the battery was sequentially dropped from a height of 1.8 m onto a marble slab for a total of 3 rounds, that is, 9 drops. (3) After each round of drops, the cell was checked for damage or electrolyte leakage, and the open-circuit voltage and internal resistance of the battery was measured (a voltage resistance tester was used as the test instrument, manufacturer: Dongguan Lik Precision Instrument Co., Ltd., model: LNG-SY1-0020-DQ). If the voltage was less than 3.0 V, the battery was deemed as failed. If there is no damage or electrolyte leakage, and the open-circuit voltage was higher than 3.0 V, the battery was deemed as not failed. In this case, drops continued until the battery failed, and then the number of drops performed when the battery failed was recorded.

The drum drop test steps are as follows:
(1) Under an ambient condition of 25±5°C, the battery was charged at 0.2C to the charge limit voltage. (2) The battery was placed into a dedicated drum drop test fixture, and dropped from a height of 1 m at a speed of 5 cycles/min for 500 cycles (2 drops per cycle). The battery was checked for damage or electrolyte leakage every 5 cycles, and the open-circuit voltage and internal resistance of the battery were measured. If the voltage was less than 3.0 V, the battery was deemed as failed. If there is no damage or electrolyte leakage, and the open-circuit voltage was higher than 3.0 V, the battery was deemed as not failed. In this case, drops continued until the battery failed, and then the number of drops performed when the battery failed was recorded.

The cycling test steps are as follows:
(1) The battery was placed in a 25°C constant temperature chamber and left standing for 30 minutes so that the battery reached a constant temperature. (2) The battery was charged at 1C constant current to a voltage of 3.65 V, then charged at a constant voltage of 3.65 V until the current was 0.05C, and then discharged at 1C constant current to a voltage of 2.5 V. This was one charge-discharge cycle, with the first discharge capacity being 100%. (3) A total of 1000 charge-discharge cycles were performed, the discharge capacity of the battery was recorded, and then the capacity retention rate of the battery was calculated. (4) Whether the electrode assembly 20 was deformed was observed through a CT image, and then the battery was disassembled to observe the interface condition of the first electrode sheet 21.

**Table 1**

| | Relationship between L and d₁ | Mechanical test | |
|---|---|---|---|
| | | Drop test: number of drops at failure | Drum drop test: number of drops at failure |
| Example 1 | L= 0.3 d₁ | 55 | 80 |
| Comparative Example | L= 1.1 d₁ | 17 | 25 |

From the test results in Table 1, compared to Comparative Example, Example 1 has the second side 52 of the first layer 50 disposed farther from the edge of the electrode assembly 20 than the first side 51, so that the second side 52 can avoid the bent portion of the first conductive plate 30. Moreover, the second layer 60 extends to the first area 61 to overlap with the first layer 50 in the first direction X. Therefore, the number of drops at failure in the drop test and drum drop test is increased, indicating that the reliability and service life of the battery in Example 1 are improved.

**Table 2**

| | Relationship between L and d₁ | Third layer extended to overlap with the first layer? | Mechanical test | | Cycling test | |
|---|---|---|---|---|---|---|
| | | | Drop test: number of drops at failure | Drum drop test: number of drops at failure | Capacity retention rate | Interface condition |
| Example 1 | L=0.3 d₁ | No | 55 | 80 | 80% | Slight purple spots |
| Example 2 | L=0.4 d₁ | No | 53 | 78 | 89% | No abnormality |
| Example 3 | L=0.7 d₁ | No | 52 | 75 | 89% | No abnormality |
| Example 4 | L=0.95 d₁ | No | 50 | 75 | 89% | No abnormality |
| Example 5 | L=0.3 d₁ | Yes | 56 | 81 | 75% | Slight purple spots |

From the test results in Table 2, compared to Examples 2 to 4, Example 1 has a smaller L value, but the number of drops at failure in the drop test and drum drop test is not significantly different. However, due to the smaller L value in Example 1, the size of the notch C is smaller, making it difficult for the injected electrolyte between the first layer 50 and the first wall 11 to flow through the notch C and sufficiently wet the electrode assembly 20. Therefore, the first electrode sheet 21 has slight purple spots, causing capacity decay. In Example 5, since the third layer 70 also extends to overlap with the first layer 50 in the first direction X, the adhesive layer of the third layer 70 is at least partially adhered to the electrode assembly 20 during the drop test, making it difficult for the injected electrolyte between the first layer 50 and the first wall 11 to flow through the notch C and sufficiently wet the electrode assembly 20. Therefore, the first electrode sheet 21 also has slight purple spots, causing capacity decay.

The above disclosures are merely preferred embodiments of this application and should not be used to limit this application. Therefore, equivalent changes made in accordance with this application shall still fall within the scope of this application.

## Claims

1. An electrochemical device, comprising a housing and an electrode assembly, wherein the housing comprises a first wall and a side wall connected to the first wall, the first wall and the side wall enclose an accommodating cavity, the electrode assembly is accommodated in the accommodating cavity, a direction from the first wall to the electrode assembly is a first direction, the electrode assembly is a wound structure, and the electrode assembly comprises a first electrode sheet, a second electrode sheet, and a separator disposed between the first electrode sheet and the second electrode sheet; wherein
the electrochemical device further comprises a first conductive plate, a first layer, and a second layer, wherein the first conductive plate comprises a first conductive area and a second conductive area connected to each other, the second conductive area is bent with respect to the first conductive area, the first conductive area is connected to the first electrode sheet, the second conductive area is connected to the first wall, the second conductive area comprises a first end portion connected to the first conductive area and a second end portion disposed opposite the first end portion, the second conductive area extends from the first end portion in a second direction perpendicular to the first direction;
the first layer comprises an insulating material, and in the first direction, the first layer is disposed between the electrode assembly and the second conductive area;
when viewed from the first direction, the first layer comprises a first side extending in a curved manner along an edge of the electrode assembly and a second side connected to the first side, wherein the second side overlaps with the electrode assembly, and the second side is farther from the edge of the electrode assembly than the first side, forming a notch in the first layer; and when viewed from the first direction, the second end portion overlaps with the first layer; and
the second layer comprises an insulating material, the second layer comprises a first area covering the second conductive area, the first area comprises a first sub-area and a second sub-area connected to each other, and when viewed from the first direction, the first sub-area covers the notch, and the second sub-area overlaps with the first layer.

2. The electrochemical device according to claim 1, wherein when viewed from the first direction, the first end portion is located within the notch.

3. The electrochemical device according to claim 1, wherein a surface of the first layer facing the first wall comprises a first recess, and the first layer is connected to the second conductive area at the first recess.

4. The electrochemical device according to claim 1, wherein the second side comprises a curved portion.

5. The electrochemical device according to claim 1, wherein a third direction is defined as perpendicular to the first direction and the second direction, a dimension of the second side in the third direction is d₂, a dimension of the second conductive area in the third direction is d, and d₂ > d.

6. The electrochemical device according to claim 1, wherein the first electrode sheet comprises a first current collector and a first active substance layer disposed on a surface of the first current collector, wherein the first current collector comprises a first portion separated from the first active substance layer, and the first conductive area is connected to the first portion.

7. The electrochemical device according to claim 6, wherein in the second direction, the first conductive area is disposed on a surface of the first portion facing the side wall.

8. The electrochemical device according to claim 1, wherein the first area is disposed between the second conductive area and the electrode assembly in the first direction.

9. The electrochemical device according to claim 8, wherein the second layer further comprises a second area connected to the first area, wherein the second area covers the first conductive area.

10. The electrochemical device according to claim 9, wherein the electrochemical device further comprises a third layer containing an insulating material, wherein the third layer comprises a third area disposed between the second conductive area and the first wall in the first direction, the third area comprises a third sub-area and a fourth sub-area connected to each other, and when viewed from the first direction, the third sub-area covers the notch, and the fourth sub-area overlaps with the first layer.

11. The electrochemical device according to claim 10, wherein the third layer further comprises a fourth area connected to the third area, and in the second direction, the first conductive area is disposed between the second area and the fourth area.

12. The electrochemical device according to claim 1, wherein the second layer comprises an adhesive layer and a substrate stacked, wherein the adhesive layer comprises the insulating material, and the substrate is adhered to the first conductive plate via the adhesive layer.

13. The electrochemical device according to claim 12, wherein the electrochemical device satisfies at least one of the following conditions:
a material of the substrate is selected from at least one of polyimide or polyethylene terephthalate; or
the insulating material of the adhesive layer is selected from at least one of butadiene, isoprene, styrene, methyl methacrylate, butyl methacrylate, isooctyl acrylate, or butyl acrylate.

14. The electrochemical device according to claim 10, wherein the fourth sub-area comprises a second end facing away from the third sub-area in the second direction, a dimension between the second end and the side wall in the second direction is ds, a radius of the first wall is R, and d₅ < 0.4 R.

15. The electrochemical device according to claim 1, wherein a third direction is defined as perpendicular to the first direction and the second direction, a dimension of the second side in the third direction is d₂, a dimension of the first area in the third direction is d₃, and d₂ < d₃.

16. The electrochemical device according to claim 1, wherein a distance between the second side and the side wall in the second direction is a first distance L, the second sub-area comprises a first end facing away from the first sub-area in the second direction, a dimension between the first end and the side wall in the second direction is d₁, and 0.4 d₁ < L < d₁.

17. The electrochemical device according to claim 1, wherein when viewed from the first direction, the second conductive area overlaps with a winding center axis of the electrode assembly.

18. The electrochemical device according to claim 1, wherein a winding starting end of the electrode assembly is provided with a cavity, and when viewed from the first direction, the first layer covers the cavity.

19. The electrochemical device according to claim 1, wherein the housing further comprises a second wall connected to the side wall and disposed opposite the first wall, the second wall being provided with a conductive member electrically insulated from the second wall, and the electrode assembly further comprises a second conductive plate electrically connected to the second electrode sheet, the second conductive plate being connected to the conductive member.

20. The electrochemical device according to claim 1, wherein the electrochemical device is a button cell, and when viewed from the first direction, an edge of the electrode assembly is substantially circular.

21. An electronic device, comprising the electrochemical device according to any one of claims 1 to 20.
